# EUROPÄISCHE PATENTANMELDUNG

(11) **EP 1 832 943 A1**
(43) Veröffentlichungstag der Anmeldung: **12.09.2007**
(21) Anmeldenummer: 06004482.3
(22) Anmeldetag: 06.03.2006
(51) Int. Cl.: G05B 19/042

(54) **Verfahren und Anordnung zum Austauschen eines elektronischen Gerätes**

(71) Anmelder: SIEMENS AKTIENGESELLSCHAFT, 80333 München (DE)
(72) Erfinder: Donderer, Markus, 92224 Amberg (DE)

(57) **Zusammenfassung**

Es wird vorgeschlagen ein Verfahren und eine Anordnung zum Austauschen eines elektronischen Gerätes (1), welches über eine Kommunikationsverbindung (2) mit weiteren elektronischen Geräten verbindbar ist, wobei das elektronische Gerät (1) mit einem Transponder (5) versehen ist, welcher für einen drahtlosen Datenaustausch mit einer Schreib-/Leseeinheit (8) vorgesehen ist. Für den Fall, dass das elektronische Gerät (1) defekt ist, kann dieses einfach ausgetauscht werden, indem die Schreib-/Leseeinheit (8) die im Transponder (5) des defekten Gerätes (1) hinterlegten Daten ausliest und diese einem Transponder (9) eines weiteren elektronischen Gerätes (10), welches als Ersatz des defekten Gerätes (1) vorgesehen ist, übermittelt.

## Beschreibung

Die Erfindung betrifft ein Verfahren zum Austauschen eines elektronischen Gerätes, welches über eine Kommunikationsverbindung mit weiteren elektronischen Geräten verbindbar ist. Darüber hinaus betrifft die Erfindung eine Anordnung mit einem elektronischen Gerät, welche zur Durchführung des Verfahrens geeignet ist.

Ein elektronisches Gerät, z. B. in Form eines modularen Automatisierungsgerätes, ist zur Steuerung eines technischen Prozesses vorgesehen, wobei dazu ein Steuerprogramm zur Beeinflussung des Prozesses abgearbeitet wird. Derartige Geräte werden häufig als SPS (speicherprogrammierbare Steuerung), PLC (Programmable Logic Controller oder kurz Controller), Soft-SPS oder Soft-PLC bezeichnet. Ein Automatisierungsgerät kann modular aufgebaut sein und eine programmierbare Zentraleinheit sowie intelligente Module enthalten, welche einzelne Automatisierungsfunktionen übernehmen, z. B. Wägung, Achsensteuerung, Regelung usw. Zum Anschluss an ein Kommunikationsnetzwerk, das zum Austausch von Daten mit weiteren Komponenten eines Automatisierungsnetzwerks dient, beispielsweise Netzwerkkomponenten oder Feldgeräten oder weiteren Automatisierungsgeräten, kann ein zusätzliches Modul, das als Kommunikationsprozessor bezeichnet wird, vorgesehen werden. Ein derartiges Automatisierungsgerät ist z. B. aus der EP 0 527 247 bekannt.

Um ein Automatisierungsgerät, Komponenten dieses Automatisierungsgerätes, Netzwerkkomponenten oder ein elektrisches Feldgerät genau identifizieren zu können, ist jeweils eine eindeutige Geräte-Identifikation (Geräte-Id), beispielsweise in Form einer Geräteadresse, eines Gerätenamens oder eines Stationsnamens, vorgesehen, wobei über diese Geräte-Id auf diese Automatisierungskomponenten schreibend und/oder lesend zugegriffen werden kann. Aus dem Siemens-Katalog IK PI, Ausgabe 2005, Kapitel 5 sind so genannte Profibus-Geräte bekannt, deren Adressen gewöhnlich über DIP-Schalter eingestellt werden. Ferner sind in Kapitel 3 dieses Kataloges Profinet-Geräte offenbart, deren Geräte-Id (Stationsname) jeweils in einem wechselbaren Speichermedium dieser Geräte hinterlegt sind. Auch im Rahmen einer Wireless-Vernetzung von Automatisierungskomponenten, welche in Zukunft eine immer größere Bedeutung haben wird, ist eine Geräte-Identifikation durch z. B. eine Adresse bzw. Stationsadresse/-name erforderlich. Darüber hinaus ist es gewöhnlich erwünscht, in den Geräten weitere Daten, z. B. Wartungsinformationen oder Instandhaltungsdaten, zu hinterlegen.
Es kann nun vorkommen, dass eine defekte Automatisierungskomponente durch eine neue ausgetauscht werden muss. Die im defekten Gerät hinterlegten Daten können aufgrund dieser Störung nicht mehr ausgelesen werden. Die neue Automatisierungskomponente ist nicht ohne Adresse betreibbar, wodurch es entweder erforderlich ist, für eine Adressvergabe ein Engineering-Tool einzusetzen oder, falls die Automatisierungskomponenten mit einem wechselbaren Speichermedium versehen werden können, das Speichermedium aus der defekten Automatisierungskomponente zu entnehmen und in die neue Automatisierungskomponente einzusetzen. Die Adressvergabe mittels Engineering-Tool ist zu zeitaufwendig, der Einsatz von wechselbaren Speichermedien insbesondere im Rahmen größerer Anlagen zu kostenintensiv. Darüber hinaus muss eine Automatisierungskomponente im Hinblick auf ein wechselbares Speichermedium entsprechend konstruktiv ausgestaltet sein. Beispielsweise muss die Automatisierungskomponente einen Modulschacht zur Aufnahme und Halterung des Speichermoduls und ferner geeignete Verbindungsmittel zum Anschluss des Speichermoduls aufweisen.

Aus der WO 2005/106606 ist ein elektrisches Feldgerät für die Prozessautomatisierung bekannt, welches an seinen Einbauorten im Prozess vorgegebene Mess-, Steuer- und Regelungsfunktionen ausführt. Um die Versorgung des Feldgerätes mit Informationen aus seiner Prozessumgebung zu vereinfachen, ist vorgesehen, im Bereich des Einbauortes des Feldgerätes mindestens einen Transponder anzuordnen, der in einem Speicher Daten mit vorgegebenen Informationen über die Prozessumgebung des Feldgerätes enthält, wobei das Feldgerät eine Leseeinheit zum berührungslosen Lesen der Daten und eine Auswerteeinheit zur Verwertung der Informationen für die von dem Feldgerät im Rahmen der Prozessautomatisierung auszuführenden Funktionen enthält.

Der vorliegenden Erfindung liegt die Aufgabe zugrunde, ein Verfahren der eingangs genannten Art anzugeben, welches ein Austauschen eines elektronischen Gerätes vereinfacht. Darüber hinaus ist zur Durchführung des Verfahrens eine Anordnung mit einem elektronischen Gerät zu schaffen, welches über eine Kommunikationsverbindung mit weiteren elektronischen Geräten verbindbar ist.

Im Hinblick auf das Verfahren wird diese Aufgabe durch die im Anspruch 1 angegebenen, im Hinblick auf die Anordnung durch die im Anspruch 2 angegebenen Maßnahmen gelöst. Vorteilhafte Ausgestaltungen der Erfindung ergeben sich aus den Unteransprüchen.

Die Erfindung hat den Vorteil, dass z. B. Adressen, Wartungsinformationen oder Instandhaltungsdaten einer Automatisierungskomponente auch für den Fall ausgelesen werden können, dass diese defekt ist. Diese Informationen gehen nicht verloren und werden der Automatisierungskomponente übertragen, welche als Ersatz für die defekte Automatisierungskomponente vorgesehen ist. Die Automatisierungskomponenten brauchen keine Öffnungen zur Aufnahme von wechselbaren Speichermedien, was insbesondere für Einsätze von Automatisierungskomponenten in einer rauen Prozessumgebung, welche eine hohe Schutzart erfordern, vorteilhaft ist.

Für mehrere Automatisierungskomponenten ist lediglich nur eine Schreib-/Leseeinheit erforderlich, welche im Servicefall zum Auslesen der Daten aus der defekten Automatisierungskomponente und zum Einlesen dieser Daten in die neue Automatisierungskomponente aufgesucht wird.

Selbstverständlich kann an jedem Einbauort einer Automatisierungskomponente eine Schreib-/Leseeinheit angeordnet sein, wodurch ein Austausch direkt am Ort der Störung einfach ermöglicht wird. In diesem Fall sind die Schreib-/Leseeinheiten so ausgestaltet, dass ein Transponder nur dann ausgelesen werden kann, wenn die diesem Transponder zugeordnete Schreib-/Leseeinheit in unmittelbarer Nähe dieses Transponders (RFID-Tags) ist.

Eine Ausbildung der über Funk auslesbaren, elektronischen Etikette als RFID (Radio Frequency Identification)-Tag hat den Vorteil, dass eine zuverlässige und bewährte Technik eingesetzt wird, die inzwischen weit verbreitet und zu niedrigen Kosten verfügbar ist. RFID ist eine Methode, um Daten auf einem Transponder berührungslos und ohne Sichtkontakt speichern und lesen zu können.

In einer Ausgestaltung der Erfindung ist vorgesehen, dass die Schreib-/Leseeinheit dem Transponder die benötigte Energie übermittelt, welche zum Auslesen der Daten erforderlich ist. Der Transponder entzieht in diesem Fall die von ihm benötigte Energie einem Abfrage- und Lesesignal der Schreib-/Leseeinheit und übermittelt dieser die in ihm hinterlegten Daten. Dadurch ist ein Austausch der Automatisierungskomponente auch für den Fall möglich, dass diese nicht mehr mit einer Spannung versorgt werden kann.

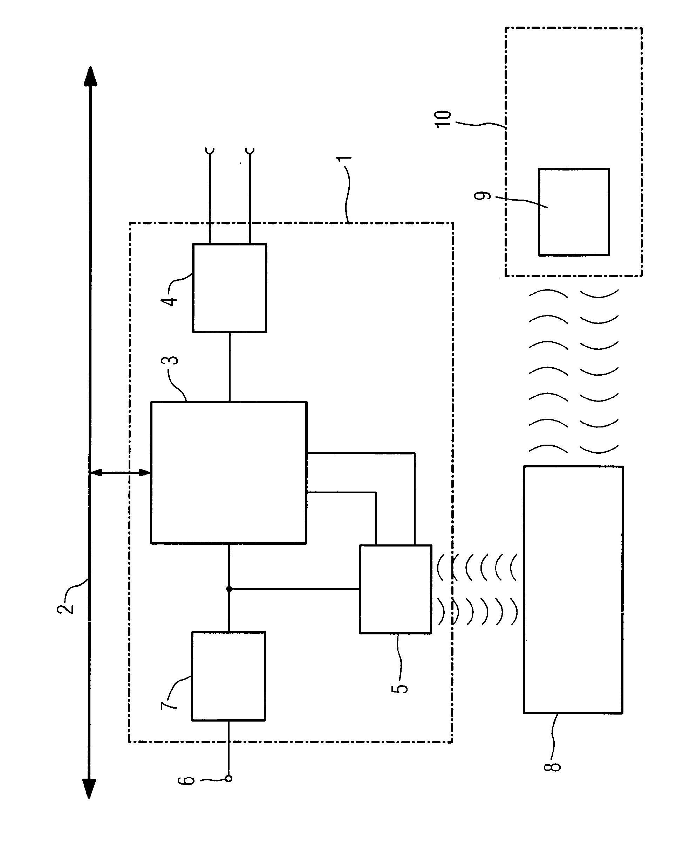

Die Erfindung wird nachfolgend anhand eines Ausführungsbeispiels unter Bezugnahme auf die einzige Figur der Zeichnung näher erläutert. Die Figur der Zeichnung zeigt in schematischer Darstellung eine Anordnung mit einer Automatisierungskomponente und einer Schreib-/Leseeinheit.

Eine Automatisierungskomponente 1 ist mit weiteren Automatisierungskomponenten über eine Kommunikationsverbindung 2, z. B. eine Kommunikationsverbindung in Form eines Industrial Ethernet-Busses, verbunden. Die Automatisierungskomponente 1 kann z. B. eine speicherprogrammierbare Steuerung, ein dezentrales Peripheriesystem, ein Feldgerät oder eine sonstige für die Steuerung eines technischen Prozesses oder Teilprozesses geeignete Automatisierungskomponente sein, wobei gewöhnlich zur Lösung kleiner Automatisierungsaufgaben mikro-speicherprogrammierbare Steuerungen, zur Lösung mittlerer Automatisierungsaufgaben speicherprogrammierbare Kleinsteuerungen und zur Lösung komplexerer Automatisierungsaufgaben leistungsstarke speicherprogrammierbare Steuerungen eingesetzt werden.
Der Automatisierungskomponente 1 ist im Rahmen einer Konfigurierung und/oder Projektierung durch ein hier nicht dargestelltes Engineeringsystem entweder über die Kommunikationsverbindung 2 oder über eine Schreib-/Leseeinheit 8 eine eindeutige Geräte-Id zuführbar, unter welcher während des Steuerbetriebs auf die Automatisierungskomponente 1 lesend und/oder schreibend zugegriffen werden kann. Diese Adresse speichert die Automatisierungskomponente 1 in einer Speicher- und Logikeinheit 3, die mit einem Ein-/Ausgabemodul 4 verbunden ist. Die Speicher- und Logikeinheit 3 sowie ein RFID-Modul 5 (Transponder, RFID-Tag) werden mit einem an einer Versorgungsspannung 6 angeschlossenen DC/DC-Wandler 7 verbunden, welcher die erforderlichen Spannungen zum Betrieb der Automatisierungskomponente 1 liefert. Im störungsfreien Betrieb der Automatisierungskomponente 1 hinterlegt die Speicher- und Logikeinheit 3 die Adresse und/oder weitere Daten, z. B. Daten in Form von Wartungs- oder Instandhaltungsdaten der Automatisierungskomponente 1, in das RFID-Modul 5.
Für den Fall, dass die Automatisierungskomponente 1 defekt ist, ist es erforderlich, diese Automatisierungskomponente 1 auszutauschen, um die Steuerung eines technischen Prozesses oder Teilprozesses nicht störend zu beeinflussen. In diesem Fall liest in einem ersten Schritt die Schreib-/Leseeinheit 8 die im RFID-Modul 5 hinterlegten Daten aus, welche die Schreib-/Leseeinheit 8 in einem nächsten Schritt einem RFID-Modul 9 einer weiteren Automatisierungskomponente 10, welche als Ersatz für die Automatisierungskomponente 1 vorgesehen ist, übermittelt. In einem weiteren Schritt wird die Automatisierungskomponente 1 von der Kommunikationsverbindung 2 getrennt und die Automatisierungskomponente 10 an die Kommunikationsverbindung 2 angeschlossen, wodurch eine Kommunikation dieser Automatisierungskomponente 10 mit der an der Kommunikationsverbindung 2 angeschlossenen Automatisierungskomponente möglich ist. Dabei kann auf die Automatisierungskomponente 10 mit der ursprünglich für die Automatisierungskomponente 1 vorgesehenen Adresse lesend und/oder schreibend zugegriffen werden, welche im Rahmen der Datenübermittlung in dem RFID-Modul 9 der Automatisierungskomponente 10 hinterlegt wurde. Selbstverständlich ist es möglich, die defekte Automatisierungskomponente 1 zunächst von der Kommunikationsverbindung 2 zu trennen, dann die im RFID-Modul 5 hinterlegten Daten auszulesen und in das RFID-Modul 9 der weiteren Automatisierungskomponente 10 zu speichern und schließlich diese Automatisierungskomponente 10 an die Kommunikationsverbindung 2 anzuschließen.
In den Fällen, in denen die RFID-Module 5, 9 der Automatisierungskomponenten 1, 10 nicht ausreichend mit Energie durch ihre Versorgungseinheiten versorgt werden können, übermittelt die Schreib-/Leseeinheit 8 den RFID-Modulen 5, 9 die benötigte Energie. Dazu entziehen die RFID-Module 5, 9 die erforderliche Energie einem Abfrage- und Lesesignal der Schreib-/Leseeinheit 8.

## Patentansprüche

1. Verfahren zum Austauschen eines elektronischen Gerätes (1), welches über eine Kommunikationsverbindung (2) mit weiteren elektronischen Geräten verbindbar ist, wobei
- ein drahtloser Datenaustausch zwischen dem elektronischen Gerät (1) und einer Schreib-/Leseeinheit (8) vorgesehen ist und
- zum Austauschen des elektronischen Gerätes (1) die Schreib-/Leseeinheit (8) die in einem Transponder (5) des elektronischen Gerätes (1) hinterlegten Daten ausliest und diese Daten einem Transponder (9) eines weiteren elektronischen Gerätes (10), welches als Ersatz des elektronischen Gerätes (1) vorgesehen ist, übermittelt.

2. Anordnung mit einer Schreib-/Leseeinheit (8) und einem elektronischen Gerät (1), welches über eine Kommunikationsverbindung (2) mit weiteren elektronischen Geräten verbindbar ist, wobei
- das elektronische Gerät (1) mit einem Transponder (5) versehen ist, welcher für einen drahtlosen Datenaustausch mit der Schreib-/Leseeinheit (8) vorgesehen ist,
- die Schreib-/Leseeinheit (8) zum Austauschen des elektronischen Gerätes (1) die im Transponder (5) des elektronischen Gerätes (1) hinterlegten Daten ausliest und diese Daten einem Transponder (9) eines weiteren elektronischen Gerätes (10), welches als Ersatz des elektronischen Gerätes (1) vorgesehen ist, übermittelt.

3. Anordnung nach Anspruch 2, **dadurch gekennzeichnet, dass** die Schreib-/Leseeinheit (8) dem Transponder (5) des elektronischen Gerätes (1) die benötigte Energie übermittelt.

4. Anordnung nach Anspruch 2 oder 3, **dadurch gekennzeichnet, dass** das elektronische Gerät (1) ein elektronisches Feldgerät, ein Automatisierungsgerät oder eine Baugruppe eines Automatisierungsgerätes ist.
